**Europäisches Patentamt**

**European Patent Office**

**Office européen des brevets**

(19)

(11) Veröffentlichungsnummer: **0 266 531**
**A2**

(12) ## EUROPÄISCHE PATENTANMELDUNG

(21) Anmeldenummer: **87113743.6**

(22) Anmeldetag: **19.09.87**

(51) Int. Cl.⁴: **F16H 1/16**

(30) Priorität: **05.11.86 DE 8629599 U**

(43) Veröffentlichungstag der Anmeldung:
**11.05.88 Patentblatt 88/19**

(84) Benannte Vertragsstaaten:
**DE FR IT**

(71) Anmelder: **Rhein-Getriebe GmbH**
**Grünstrasse 34**
**D-4005 Meerbusch 1(DE)**

(72) Erfinder: **Bannier, Georg**
**Essener Strasse 6**
**F-4044 Kaarst 2(DE)**

(74) Vertreter: **Dipl.-Ing. H. Marsch Dipl.-Ing. K.**
**Sparing Dipl.-Phys.Dr. W.H. Röhl**
**Patentanwälte**
**Rethelstrasse 123**
**D-4000 Düsseldorf(DE)**

(54) **Antriebsaggregat.**

(57) Die Erfindung betrifft ein Antriebsaggregat mit einer in einem Gehäuse (1) angeordneten, antreibbaren Welle (3), die mit einer ebenfalls im Gehäuse (1) untergebrachten Kupplung in Wirkverbindung steht, wobei die Kupplung über eine Feder (8) in Einrückstellung vorgespannt und über einen in einem Radialschlitz (15) axial geführten Querkeil (16) und einen darauf einwirkenden, von außen durch einen Betätigungshebel (19) betätigbaren Stößel (13) ausrückbar ist. Um bei gedrängter Bauweise in Achsrichtung der Abtriebswelle (6) in allen Betriebszuständen ein Ausrücken der Kupplung mit geringer Kraft und geringem Weg zu ermöglichen und die Lager völlig vom Federdruck der Kupplung zu entlasten, ist vorgesehen, daß die antreibbare Welle (3) eine Schneckenwelle ist, die mit einem Schneckenkranz (4) in Eingriff steht, daß die Kupplung eine Rutschkupplung mit einem den Schneckenkranz (4) beaufschlagenden, durch die Feder (8) vorgespannten Druckring (7) und einem konischen, mit einer im Gehäuse (1) gelagerten Abtriebswelle (6) fest verbundenen Ring (5), auf dem sich der Schneckenkranz (4) befindet, ist, daß die Abtriebswelle (6) den Radialschlitz (15) zur axialen Führung des Querkeils (16), der an dem Druckring (7) auf der der Feder (8) abgewandten Seite angreift, besitzt und daß der Stößel (13) über eine Schraube (12), die von einer Gewindebohrung im Gehäuse (1) koaxial zur Abtriebswelle (6) verdrehbar aufgenommen ist, mit dem Betätigungshebel (19), dessen Hebelweg über eine Einrichtung (20, 21) zur Einstellung der axialen Postion des Stößels (13) justierbar ist, in Eingriff steht.

Das Antriebsaggregat ist für Winden, Transportbänder o.dgl. geeignet.

FIG. 1

## Antriebsaggregat

Die Erfindung betrifft ein Antriebsaggregat mit einer in einem Gehäuse angeordneten, antreibbaren Welle, die mit einer ebenfalls im Gehäuse untergebrachten Kupplung in Wirkverbindung steht, wobei die Kupplung über eine Feder in Einruckstellung vorgespannt und über einen in einem Radialschlitz axial geführten Querkeil und einen darauf einwirkenden, von außen durch einen Betätigungshebel betätigbaren Stößel ausrückbar ist.

Aus der DE-B-1 068 876 ist ein derartiges Antriebsaggregat für eine Winde, ein Förderband o.dgl. bekannt, bei dem in der als Hohlwelle ausgebildeten Antriebswelle eine Feder angeordnet ist, die auf einen als Hohlwelle ausgebildeten Stößel wirkt, der einen Querkeil trägt. Letzterer erstreckt sich durch die Antriebswelle in ein Kupplungsstück einer auf der Antriebswelle angeordneten Klauenkupplung, die durch Verschieben des Stößels gegen die Kraft der Feder ausrückbar ist. Die Kupplung ist mit einer Seiltrommel 16 verbunden, die über Wälzlager auf der Antriebswelle gelagert ist. Abgesehen davon, daß ein derartiges Antriebsaggregat in Achsrichtung eine relativ große Baulänge erfordert, werden die Lager nicht vom Federdruck entlastet, was die Lebensdauer beeinträchtigt, und das Ausrücken der Kupplung findet gegen das Reibmoment und das volle, an der Seitrommel angreifende Drehmoment statt. Außerdem ist hierbei nachteilig, daß die Komponenten nicht im Ölbad laufen können und der Betätigungshebel für den Stößel in der Achse der Antriebswelle verschwenkt wird.

Ferner ist es aus der DE-A-476 034 bei einem Antriebsaggregat für eine Winde bekannt, zum Ausrücken der dort vorgesehenen Rutschkupplung einen Stößel zu verwenden, der eine Gewindebuchse trägt, an der eine über einen Hebel verdrehbare Schraube angreift, um den Stößel axial zu verschieben. Abgesehen davon, daß hier eine große Vielzahl von Lagern nötig sind, sind ansonsten aber auch die gleichen Nachteile wie bei dem vorstehend erwähnten Antriebsaggregat vorhanden.

Außerdem ist aus der DE-A-3 123 284 eine Rutschkupplung bekannt, bei der ein federvorgespannter Druckring einen Schneckenkranz eines Schneckengetriebes beaufschlagt, der sich auf einem konischen, mit einer im Gehäuse gelagerten Antriebswelle fest verbundenen Ring befindet. Hierbei laufen die Komponenten im Ölbad und das Rutschmoment ist in einfacher Weise von außen einstellbar. Jedoch ist hierbei nicht vorgesehen, daß die Rutschkupplung ausrückbar ist, so daß sich diese Rutschkupplung nicht für Freifallwinden o.dgl. eignet, bei denen im Bedarfsfall der Antrieb außer Betrieb zu setzen ist, so daß sich die Abtriebswelle frei bewegen kann.

Aufgabe der Erfindung ist es, ein Antriebsaggregat der eingangs genannten Art zu schaffen, das bei gedrängter Bauweise in Achsrichtung der Abtriebswelle in allen Betriebszuständen ein Ausrücken der Kupplung mit geringer Kraft und geringem Weg ermöglicht und bei dem die Lager völlig vom Federdruck der Kupplung entlastet sind.

Diese Aufgabe wird dadurch gelöst,
daß die antreibbare Welle eine Schneckenwelle ist, die mit einem Schneckenkranz in Eingriff steht,
daß die Kupplung eine Rutschkupplung mit einem den Schneckenkranz beaufschlagenden, durch die Feder vorgespannten Druckring und einem konischen, mit einer im Gehäuse gelagerten Abtriebswelle fest verbundenen Ring, auf dem sich der Schneckenkranz befindet, ist
daß die Abtriebswelle den Radialschlitz zur axialen Führung des Querkeils, der an dem Druckring auf der der Feder abgewandten Seite angreift, besitzt und
daß der Stößel über eine Schraube, die von einer Gewindebohrung im Gehäuse koaxial zur Abtriebswelle verdrehbar aufgenommen ist, mit dem Betätigungshebel, dessen Hebelweg über eine Einrichtung zur Einstellung der axialen Position des Stößels justierbar ist, in Eingriff steht.

Die Verwendung des Schneckengetriebes mit der Rutschkupplung ermöglicht eine gedrängte Bauweise in Achsrichtung der Abtriebswelle, ein Laufen aller Komponenten im Ölbad, die Realisierung großer Übersetzungen bei einstufigem Getriebe, gegebenenfalls eine einfache Einstellung des Rutschmomentes von au ßen und zusammen mit der vorgesehenen Ausbildung der Ausrückung der Rutschkupplung ein Ausrücken der Kupplung mit geringer Kraft und geringem Weg, wobei letzterer über die Einrichtung zur Einstellung der axialen Position des Stössels entsprechend justierbar ist. Außerdem gewährleistet diese zudem einfache Konstruktion, daß die Lager völlig vom Federdruck der Rutschkupplung entlastet sind, so daß eine lange Lebensdauer erzielt wird. Die Einstellung des Tragbildes des Schneckengetriebes ist von der Einstellung der Rutschkupplung unabhängig. Das Antriebsaggregat ist somit zur Anwendung bei Freigallwinden, Transportbändern o.dgl. bestens geeignet.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

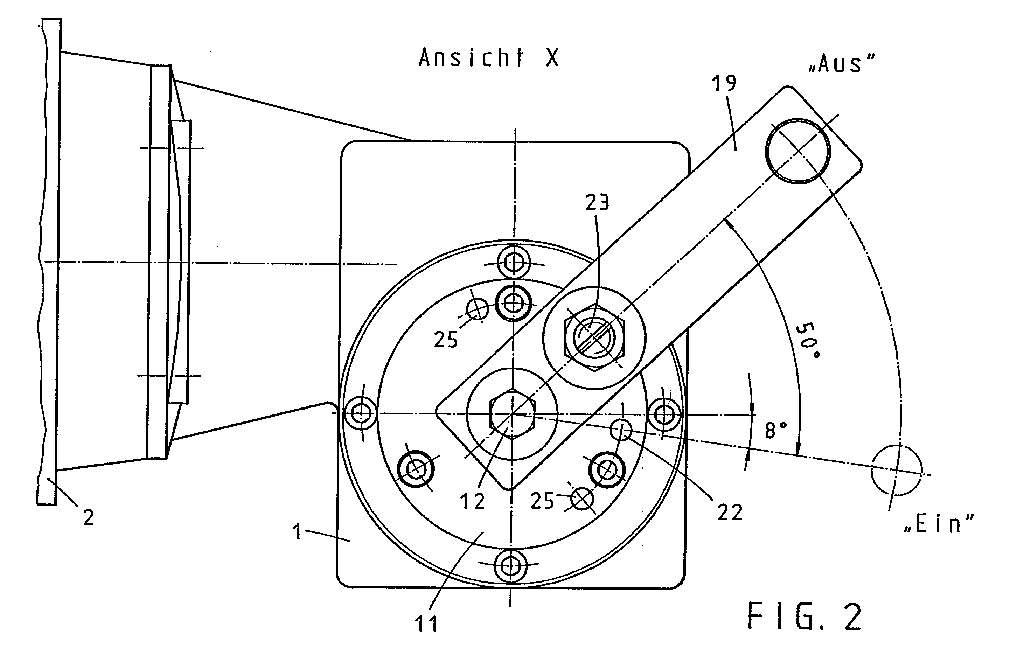

Fig. 1 zeigt eine Antrebsaggregat im wesentlichen im Axialschnitt (teilweise versetzt gezeichnet, vgl. hierzu Fig. 2).

Fig. 2 zeigt eine Stirnansicht des Antriebsaggregats von Fig. 1.

Fig. 3 zeigt einen Schnitt gemäß der Linie A-A von Fig. 1.

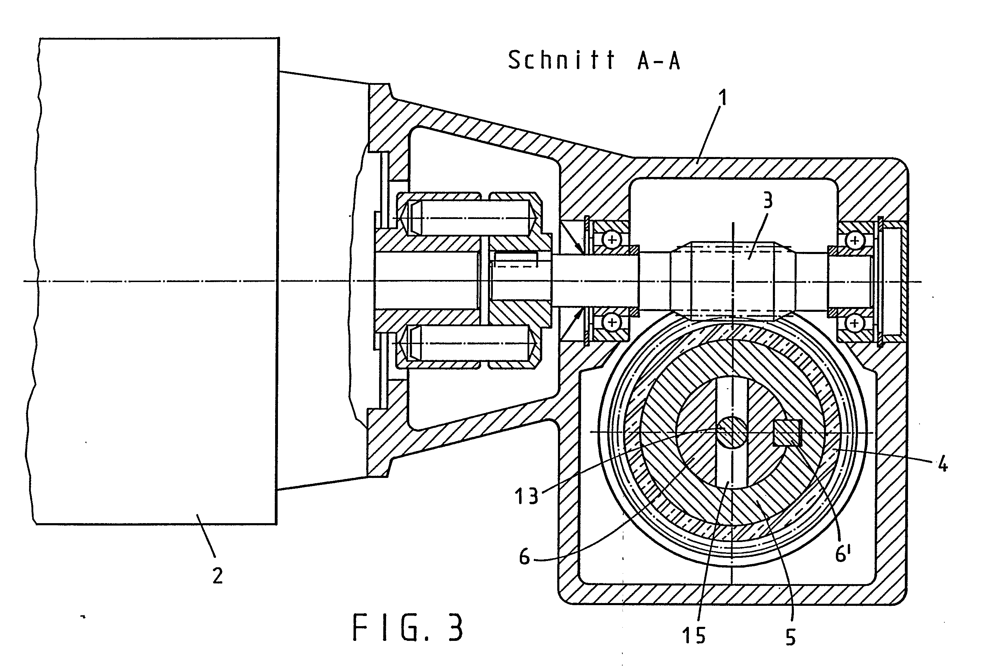

Das dargestellte Antriebsaggregat umfaßt ein mehrteiliges Gehäuse 1, an dem ein Antriebsmotor 2 angeflanscht ist, der eine Schneckenwelle 3 treibt, die mit einem Schneckenkranz 4 in Eingriff steht. Der Schneckenkranz 4 besitzt eine konische Innenbohrung, die mit einem konischen Ring 5 einer Rutschkupplung in Eingriff steht. Der konische Ring 5 sitzt über eine Paßfeder 6' (Fig. 3) fest auf einer Abtriebswelle 6, die in dem Gehäuse 1 abgedichtet gelagert ist. Die Abtriebswelle 6 ist beidseitig über Wälzlager 6" in dem Gehäuse 1 gelagert. Eine Druckscheibe 7, die axial gegenüber der Abtriebswelle 6 beweglich ist, wird über ein Tellerfederpaket 8 gegen den Schneckenkranz 4 gedrückt. Das Rutschmoment wird über eine Mutter 9, die auf die Abtriebswelle 6 geschraubt und am Außenumfang mit Axialnuten zu ihrer Verstellung versehen ist, und einen zwischen der Mutter 9 und dem Tellerfederpaket 8 angeordneten Ring 10 und die hierdurch bedingte Vorspannung des Tellerfederpakets 8, die auf die Druckscheibe 7 und damit auf die Reibfläche zwischen Schneckenkranz 4 und Ring 5 wirkt, eingestellt. Die Mutter 9 wird insbesondere durch einen am Umfang der Mutter einrastbaren, in Richtung zur Mutter 9 federvorgespannten Arretierstift beim Einstellen des Rutschmoments festgehalten, der in Betrieb mittels eines außerhalb des Gehäuses 1 betätigbaren Feststelleinrichtung in Nichteingriffsstellung zur Mutter 9 feststellbar ist.

Das nach außen dichte Gehäuse 1 ist an einem Ende durch einen Einsatz 11 verschlossen, der eine Bohrung koaxial zur Abtriebswelle 6 aufweist. Diese Bohrung ist in ihrem mittleren Abschnitt mit Gewinde versehen und in ihrem gehäuseinnenseitigen Abschnitt erweitert. Sie nimmt eine Schraube 12 auf, die sich abgedichtet aus dem Einsatz 11 heraus und bis zu dem erweiterten Abschnitt der Bohrung in diese hinein erstreckt. Die Schraube 12 steht mit einem Stößel 13 in Eingriff, der sich koaxial durch eine Bohrung 14 in dem benachbarten Ende der Abriebswelle 6 erstreckend bis in einen Schlitz 15, der sich radial durch die Abtriebswelle 6 erstreckt, ragt. In dem Schlitz 15 ist ein Querkeil 16 axial verschiebbar und durch den Schlitz 15 geführt angeordnet. Der Querkeil 16 steht über seine über den Durchmesser der Abtriebswelle 6 hinausragende Enden mit der Druckscheibe 7 einerseits und ferner mit dem zugewandten Ende des Stößels 13 andererseits in Eingriff. Abgesehen davon ist der Stößel 13 mit zwei Bunden 17 versehen, die zwischen sich ein Axialrillenkugellager 18 aufnehmen, von dem der Lagerring mit größerem Durchmesser von dem erweiterten Abschnitt der Bohrung des Einsatzes 11 aufgenommen und geführt wird.

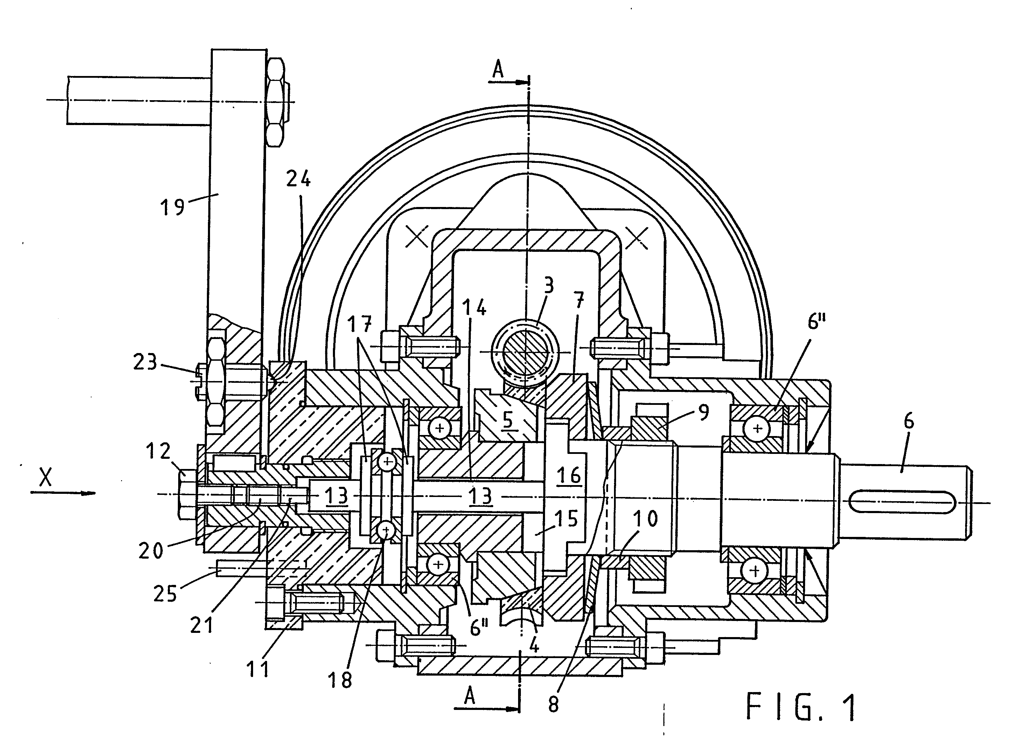

Das aus dem Einsatz 11 herausragende Ende der Schraube 12 ist mit einem Hebel 19 verbunden, der um eine vorbestimmte Winkelstellung verschwenkbar ist, wodurch die Schraube 12 aus ihrer in Fig. 1 dargestellten Ausgangsstellung einwärts gedreht wird. Hierdurch wird der Stößel 13 und damit der Querkeil 16 axial verschoben, wodurch die Rutschkupplung entlastet wird. Die Abtriebswelle 6 wird damit frei beweglich.

Zur Einstellung der axialen Position des Stößels 13 ist die Schraube 12 mit einer Bohrung versehen, die in einem gehäuseinnenseitigen erweiterten Abschnitt das zugewandte Ende des Stößels 13 aufnimmt und nach außen durch eine Schraube 20 dicht verschlossen ist. Zwischen der Schraube 20 und dem zugewandten Ende des Stößels 13 können eine oder mehrere Distanzstücke 21 angeordnet sein.

Der Einsatz 11 kann außenseitig an vorbestimmten Stellen Rastausnehmungen 22 aufweisen, in die eine von einer Schraube 23 getragene federvorgespannte Kugel 24 einrasten kann. Die Schraube 23 wird von dem Hebel 19 aufgenommen.

Außerdem kann der Einsatz 11 Anschläge 25 aufweisen, die die Schwenkbewegung des Hebels 19 winkelmäßig begrenzen.

**Ansprüche**

1. Antriebsaggregat mit einer in einem Gehäuse (1) angeordneten, antreibbaren Welle (3), die mit einer ebenfalls im Gehäuse (1) untergebrachten Kupplung in Wirkverbindung steht, wobei die Kupplung über eine Feder (8) in Einrückstellung vorgespannt und über einen in einem Radialschlitz (15) axial geführten Querkeil (16) und einen darauf einwirkenden, von außen durch einen Betätigungshebel (19) betätigbaren Stößel (13) ausrückbar ist,
dadurch gekennzeichnet,
daß die antriebbare Welle (3) eine Schneckenwelle ist, die mit einem Schneckenkranz (4) in Eingriff steht,
daß die Kupplung eine Rutschkupplung mit einem den Schneckenkranz (4) beaufschlagenden, durch die Feder (8) vorgespannten Druckring (7) und einem konischen, mit einer im Gehäuse (1) gelagerten Abtriebswelle (6) fest verbundenen Ring (5), auf dem sich der Schneckenranz (4) befindet, ist,

daß die Abriebswelle (6) den Radialschlitz (15) zur axialen Führung des Querkeils (16), der an dem Druckring (7) auf der der Feder (8) abgewandten Seite angreift, besitzt und

daß der Stößel (13) über eine Schraube (12), die von einer Gewindebohrung im Gehäuse (1) koaxial zur Abtriebswelle (6) verdrehbar aufgenommen ist, mit dem Betätigungshebel (19), dessen Hebelweg über eine Einrichtung (20, 21) zur Einstellung der axialen Position des Stößels (13) justierbar ist, in Eingriff steht.

2. Antriebsaggregat nach Anspruch 1, dadurch gekennzeichnet, daß die Einrichtung zur Einstellung der axialen Position des Stößels (13) eine von außen in die Schraube (12) eingesetzte und auf das dem Querkeil (16) abgewandte Ende des Stößels (13) einwirkende Schraube (20) umfaßt.

3. Antriebsaggregat nach Anspruch 1 oder 2, dadurch gekennzeichnet, daß der Stößel (13) mit einem Ende von einer Bohrung der Schraube (12) aufgenommen wird.

4. Antriebsaggregat nach einem der Ansprüche 1 bis 3, dadurch gekennzeichnet, daß der Stößel (13) durch ein Axiallager (18), insbesondere ein Axialrillenkugellager, gelagert und geführt ist.

5. Antriebsaggregat nach einem der Ansprüche 2 bis 4, dadurch gekennzeichnet, daß die Schraube (12) eine Bohrung zur Aufnahme von mit dem benachbarten Ende des Stößels (13) in Eingriff stehenden Distanzstücken (21) auf weist.

6. Antriebsaggregat nach einem der Ansprüche 1 bis 5, dadurch gekennzeichnet, daß das Gehäuse (1) einen Einsatz (11) aufweist, in dem die Gewindebohrung für die Schraube (12) angeordnet ist.

7. Antriebsaggregat nach einem der Ansprüche 1 bis 6, dadurch gekennzeichnet, daß das Gehäuse (1), insbesondere dessen Einsatz (11), Rasten (22) für den Betätigungshebel (19) aufweist.

8. Antriebsaggregat nach einem der Ansprüche 1 bis 7, dadurch gekennzeichnet, daß das Gehäuse (1), insbesondere dessen Einsatz (11), Anschläge (25) für den Betätigungshebel (19) aufweist.

FIG. 1

0 266 531

Ansicht X

„Aus"

„Ein"

50°

8°

FIG. 2

Schnitt A-A

FIG. 3

0 266 531